# FASCICULE DE BREVET EUROPEEN

(11) **EP 0 900 519 B1**
(45) Date de publication et mention de la délivrance du brevet: **18.04.2001**
(21) Numéro de dépôt: 98430021.0
(22) Date de dépôt: 04.09.1998
(51) Int. Cl.: A01D 46/28

(54) **Machine et procédé de récolte sélective de baies**
Maschine und Verfahren für die selektive Ernte von Beeren
Machine and method for selectively harvesting of berries

(30) Priorité: 05.09.1997 FR 9711264
(43) Date de publication de la demande: 10.03.1999
(60) Demande divisionnaire: 99122302.5
(73) Titulaire: Pellenc (Société Anonyme), 84120 Pertuis (FR)
(72) Inventeur: Pellenc, Roger, 84120 Pertuis (FR)
(74) Mandataire: Marek, Pierre

(56) Documents cités:
- EP-A- 0 200 631
- FR-A- 2 357 449
- FR-A- 2 373 222
- FR-A- 2 437 769
- FR-A- 2 638 602
- US-A- 4 976 094

## Description

La présente invention concerne une machine et un procédé de récolte sélective de baies telles que raisin, framboises, groseilles, cassis, etc. Plus particulièrement, l'invention vise une machine à vendanger et un procédé de vendange sélective.

On sait que la production de vins de qualité (vins d'appellation d'origine contrôlée) oblige les vignerons, lors de la récolte, à ne pas dépasser des rendements à l'hectare fixés par des textes réglementaires en fonction des appellations.

D'autre part, on sait que la viticulture mondiale et particulièrement la viticulture française sont de plus en plus orientées vers des productions de qualité. Dans les crus les plus prestigieux, les vendangeurs effectuent une récolte sélective manuelle des raisins. Lors de la vendange, ils récoltent, dans un premier seau, les baies de meilleure qualité et, dans un deuxième, le reste de la vendange. De nombreux viticulteurs de zones d'appellation moins prestigieuses souhaiteraient utiliser ce mode de récolte pour augmenter la qualité de leur production, mais, malheureusement, le coût de la récolte sélective manuelle est prohibitif.

Depuis une dizaine d'années, avec les nouveaux systèmes de récolte à secoueurs ou bras cueilleurs qui ne fouettent pas la végétation, il est possible, en fonction des réglages des paramètres de mouvement des secoueurs ou bras cueilleurs, de pratiquer une récolte mécanique sélective grossière. Par exemple, si l'on règle la fréquence de secouage à 550 coups/minute, sur une vigne déterminée, on va récolter la totalité des baies, alors que si l'on ramène ce réglage à 450 coups/minute, on va laisser une certaine quantité de raisin sur les ceps. A l'observation, on constate que les baies qui sont restées sur les souches, sont les baies les plus difficiles à détacher : baies vertes ou baies beaucoup moins mures. Malheureusement, avec l'entraînement mécanique actuel des systèmes de récolte des machines à vendanger, le secouage n'est pas proportionnel à l'avancement, seule la fréquence de secouage est réglable depuis le poste de pilotage. Les autres réglages souhaitables tels que :
- amplitude de secouage ;
- pincement (le pincement est l'espace qui existe entre deux bras cueilleurs disposés de part et d'autre du plan vertical médian du système de secouage);
s'effectuent actuellement manuellement, à l'aide d'outils tels que clés et nécessitent l'arrêt de la machine et le nettoyage des organes impliqués dans le réglage.

D'autre part, les systèmes de secouage actuels à entraînement mécanique, n'offrent aucune possibilité de réglage de l'accélération (raideur) des bras cueilleurs et ne permettent pas de travailler en mode proportionnel à l'avancement, ni en mode de décompression.

La présente invention a donc notamment pour objet de remédier aux inconvénients et insuffisances susmentionnés des machines de récolte de baies comportant un système de secouage à mouvements alternatifs.

Selon une première disposition caractéristique de la machine et du procédé de l'invention, le système de secouage constitué de deux ensembles de détachement des baies, comportant, chacun, au moins un bras cueilleur, et, de préférence, une pluralité de secoueurs ou bras cueilleurs superposés, est accouplé à au moins un dispositif électro-hydraulique d'entraînement comprenant au moins un vérin hydraulique commandé par une servovalve ou par un électrodistributeur proportionnel asservi(e) par un ensemble électronique de commande, de préférence à microprocesseur.

Selon un mode de mise en oeuvre préféré et très avantageux de la machine et du procédé de l'invention, chaque ensemble de détachement de baies est individuellement accouplé à un dispositif électrohydraulique d'entraînement comprenant un vérin hydraulique commandé par une servovalve ou par un électrodistributeur proportionnel distinct(e), ces deux servovalves ou électrodistributeurs proportionnels étant asservi(e)s par l'ensemble électronique à microprocesseur.

Grâce à la machine et au procédé de l'invention, il est notamment possible:
- de générer une infinité de mouvements de récolte, ce qui ne peut être obtenu par les systèmes actuels à entraînement mécanique ;
- de déterminer les meilleurs paramètres des bras cueilleurs adaptés à chaque variété de cépage et de palissage : fréquence, amplitude, pincement et accélération (raideur), sans intervention mécanique, en agissant seulement sur le pupitre de commande de l'ensemble électronique ;
- de générer un secouage proportionnel à l'avancement ;
- d'introduire des cycles de décompression qui permettent au végétal d'être moins écrasé et aux grappes de raisin entières d'être libres dans leur chute ;
- de sélectionner le meilleur mode de secouage :
   - non proportionnel à l'avancement,
   - proportionnel à l'avancement,
   - en décompression ;
- de régler les paramètres de secouage directement depuis le pupitre de commande, en faisant varier les réglages : du pincement des bras cueilleurs, de la fréquence de secouage, de l'amplitude de secouage, de l'accélération de secouage, de la décompression des bras cueilleurs.

Selon une autre disposition caractéristique du procédé de l'invention, un logiciel approprié permet au viticulteur de déterminer les paramètres optimum de la récolte et de les programmer dans une banque de données de parcelles et/ou de cépages, en fonction de chaque parcelle, de façon à pouvoir les utiliser d'année en année sur les variétés identiques.

On conçoit que la possibilité de régler rapidement et facilement les différents paramètres susmentionnés du secouage, permet une récolte sélective des baies en fonction des informations enregistrées par l'ensemble électronique de commande, concernant, par exemple, la variété et la maturité du raisin, un tel mode de récolte donnant des résultats comparables à ceux de la récolte sélective manuelle, de façon beaucoup plus rapide et avec un coût incomparablement moins important.

Selon une autre disposition caractéristique, le système de secouage est équipé de capteurs de position permettant, en permanence de connaître la position des bras cueilleurs. Ces capteurs pouvant être des capteurs angulaires, par exemple constitués par des potentiomètres et placés, par exemple, à la partie supérieure des arbres oscillants des ensembles de détachement des baies, ces capteurs angulaires permettant, en permanence, de relever la position angulaire de chacun desdits arbres oscillants. On pourrait aussi utiliser des capteurs linéaires connus en soi.

Un autre problème rencontré par l'utilisation de machines à vendanger dans les vignes dont les palissages comportent des piquets réalisés en bois ou en béton est constitué par le fait que les secousses engendrées par le fonctionnement des ensembles de détachement des baies provoquent l'oscillation des piquets dans toutes les directions, lors de la rencontre de ces derniers, cette oscillation pouvant entraîner la rupture desdits piquets.

Un autre objet de l'invention est donc de supprimer ce grave inconvénient.

Dans ce but, selon une autre importante disposition caractéristique du procédé et de la machine de récolte de baies selon l'invention, la machine comporte un système de secouage constitué de deux ensembles de détachement des baies et actionné par un dispositif hydraulique piloté par un système de commande, un détecteur de piquets, par exemple disposé dans l'espace ou en regard de l'espace ménagé entre lesdits ensembles, est relié électriquement ou mécaniquement audit système de commande, de façon à transmettre à ce dernier les informations de présence de piquets, lors de la rencontre de ces derniers, ledit système de commande étant configuré ou programmé pour réduire au moins un paramètre de secouage (par exemple : fréquence et/ou amplitude et/ou accélération).

Selon le mode de mise en oeuvre avantageux du procédé et de la machine de récolte sélective de baies décrits dans la suite du présent exposé, l'ensemble électronique de commande est relié à un détecteur de piquets équipant le système de secouage et il est programmé pour réduire la violence du secouage lors de la rencontre des piquets. Ce détecteur de piquets pourrait aussi être avantageusement mis en oeuvre sur des machines à vendanger utilisant un autre type de commande du système de secouage, tel que commande électrique, électromécanique, mécanique, hydraulique, ..., comme cela ressort de ce qui précède.

Grâce à ce dispositif détecteur de piquets, on évite la casse des piquets, notamment des piquets en béton ou en bois, et on assure une plus grande longévité des bras cueilleurs du système de secouage lorsque le palissage comporte des piquets métalliques.

Les buts, caractéristiques et avantages ci-dessus, et d'autres encore, ressortiront mieux de la description qui suit et des dessins annexés dans lesquels :

La figure 1 est une vue en perspective et à caractère schématique d'un exemple de réalisation d'un système de secouage asservi selon l'invention.

La figure 2 représente le schéma hydraulique du dispositif électro-hydraulique d'entraînement des ensembles de détachement des baies.

La figure 3 est une vue en plan et à caractère schématique du dispositif détecteur de piquets équipant le système de secouage.

La figure 4 est une vue synoptique de l'ensemble électronique du dispositif et du procédé de secouage selon l'invention.

Les figures 5 à 8 sont des vues schématiques illustrant l'adaptation de la durée du cycle de secouage à la vitesse d'avancement de la machine.

Les figures 9 à 11 sont des vues schématiques expliquant le fonctionnement du système de secouage en mode de décompression.

On se reporte auxdits dessins pour décrire un exemple intéressant, bien que nullement limitatif, de réalisation de la machine et de mise en oeuvre du procédé de récolte sélective de baies selon l'invention.

Afin de ne pas compliquer inutilement la description et les dessins, on a représenté sur les dessins annexés et on décrit ci-après seulement le système de secouage à commande asservie qui fait l'objet de la machine, étant entendu que les autres parties de celle-ci (bâti, motorisation, convoyeurs de vendange, bennes de réception, etc.) peuvent être exécutées de la façon habituelle bien connue de l'homme de l'art.

D'autre part, si l'on a représenté et si l'on décrit ci-après des bras cueilleurs d'un genre particulier, et dont les performances sont très remarquables, on n'exclut aucunement la possibilité d'utiliser des secoueurs d'un autre genre animés de mouvements alternatifs qu'ils communiquent à la végétation et qui équipent actuellement les machines à vendanger de nombreux constructeurs.

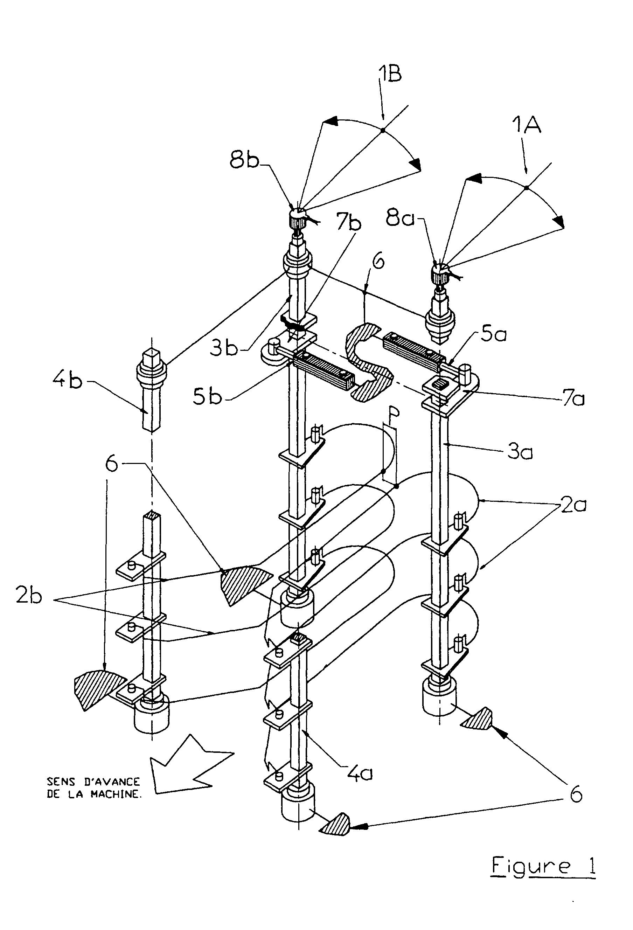

Sur la figure 1, on voit un système de secouage constitué de deux ensembles de détachement des baies 1A et 1B comprenant, chacun, de manière connue en soi, une pluralité de bras cueilleurs superposés 2a, 2b qui, selon l'exemple illustré, sont constitués par des tiges flexibles semi-rigides du genre décrit dans le document FR-A-2 638 602, comportant une extrémité avant inclinée et une extrémité arrière recourbée séparées par une portion rectiligne ou sensiblement, ces secoueurs étant fixés, par l'intermédiaire de leurs extrémités, d'une part, à un premier arbre vertical 3a, 3b monté avec une aptitude d'oscillation autour de son axe longitudinal, sur le bâti 6 dudit système de secouage, et, d'autre part, à un deuxième arbre vertical 4a, 4b qui peut être fixe, par rapport audit bâti 6, ou installé avec une latitude d'oscillation, ou monté fou. On précise que chaque ensemble de détachement des baies 1A et 1B pourrait comporter un unique bras cueilleur 2.

L'oscillation de chaque arbre 3a, 3b, est obtenue au moyen d'un vérin hydraulique, de préférence d'un type admettant des accélérations et des vitesses importantes sans usure notable, ces vérins 5a, 5b, étant reliés, chacun, par l'intermédiaire de leurs extrémités opposées et d'articulations, d'une part, à un élément fixe du bâti 6 du système de secouage et, d'autre part, à un levier horizontal 7a, 7b, rigidement solidaire de l'arbre 3a ou 3b, respectivement.

Alternativement, on pourrait utiliser un seul vérin pour l'entraînement simultané des deux arbres 3a, 3b, par exemple en reliant ces derniers au moyen d'une barre d'accouplement. Toutefois, l'utilisation de deux vérins confère des avantages particuliers très intéressants qui ressortent de la suite de la description.

Des capteurs de position reliés à l'électronique de commande, permettent de relever, en permanence, la position des bras cueilleurs 2a, 2b.

Des capteurs angulaires de position 8a, 8b par exemple placés à la partie supérieure des arbres 3a, 3b, respectivement, et reliés à l'ensemble électronique de commande, permettent en permanence de relever la position angulaire de chacun desdits arbres. Ces capteurs angulaires ou capteurs de position sans contact, par exemple constitués par des potentiomètres, sont à durée de vie illimitée. On remarque, à ce stade de la description, que les pièces en mouvement sont très peu nombreuses.

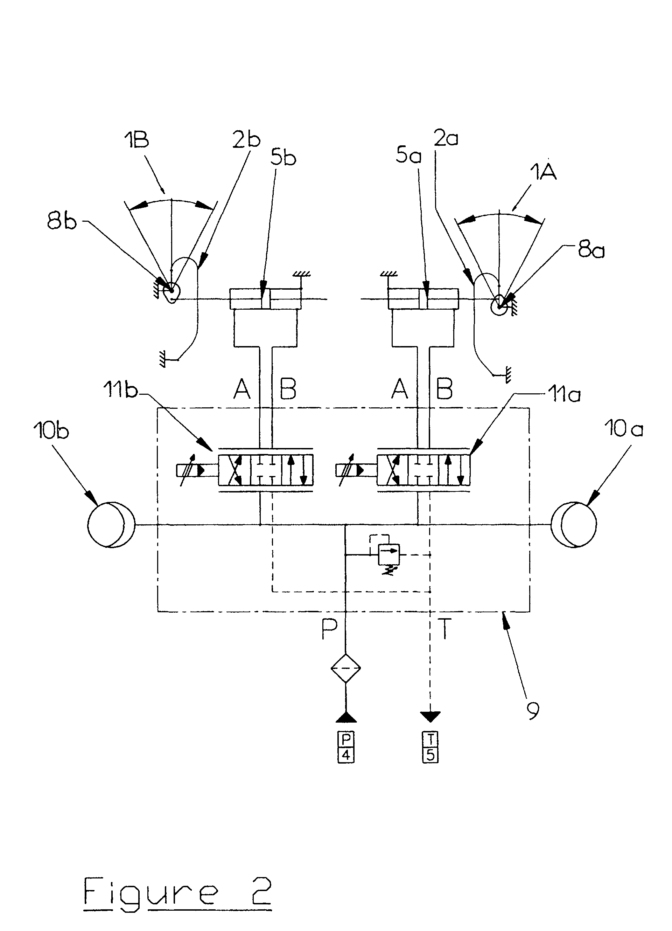

Les vérins 5a, 5b sont actionnés par un ensemble hydraulique (figure 2) constitué d'un bloc hydraulique 9 avec régulation de pression et accumulateur hydropneumatique 10a, 10b, et de deux servovalves 11a, 11b. Ces deux servovalves pourraient être remplacées par deux électrodistributeurs proportionnels.

Le système de secouage à commande asservie selon l'invention peut être avantageusement équipé d'un détecteur automatique de piquets, lequel peut également équiper des machines à vendanger utilisant d'autres types de systèmes de commande des mouvements de leur système de secouage, tels que dispositif d'actionnement et/ou système de commande électrique, mécanique, électromécanique ou autre, ce détecteur de piquets étant, par exemple, disposé dans l'espace ou en regard de l'espace ménagé entre les ensembles de détachement des baies pour le passage du rang de vigne palissé. Ce détecteur de piquets est relié, par exemple électriquement ou mécaniquement, audit système de commande, de façon à transmettre à ce dernier les informations de présence des piquets du palissage, lors de la rencontre de ces derniers, ledit système de commande étant configuré ou programmé pour réduire la valeur de l'un au moins des paramètres de secouage (par exemple : fréquence, et/ou amplitude, et/ou accélération), lors de la réception des informations de rencontre des piquets Pi transmises par ledit dispositif détecteur de piquets 12a, 12b.

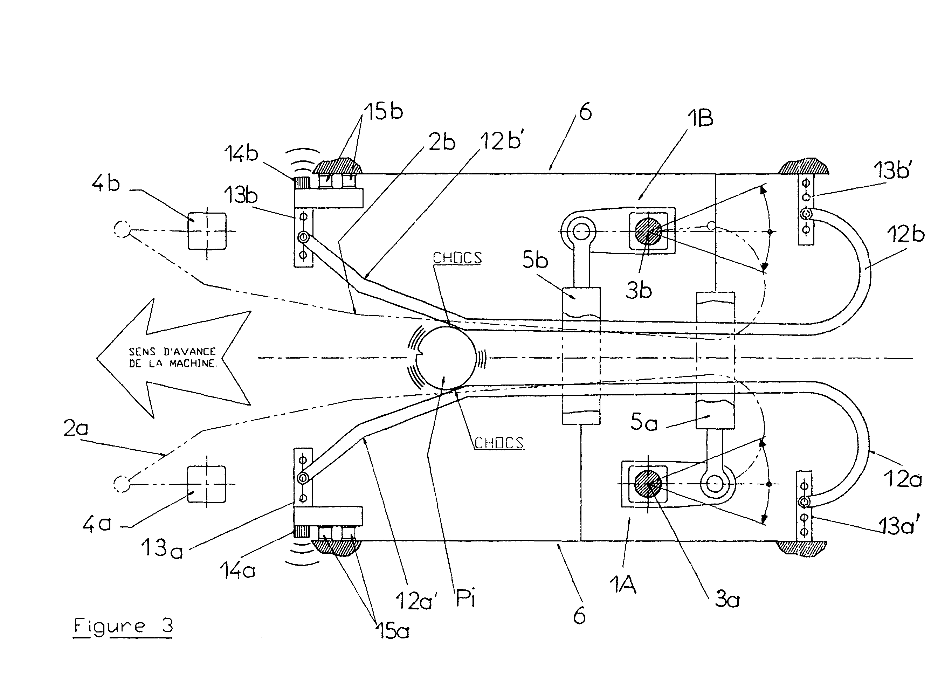

Selon le mode de mise en oeuvre très avantageux du procédé et de la machine de récolte sélective de baies décrits précédemment, le détecteur automatique de piquets (figure 3) est disposé au-dessus des ensembles de détachement des baies 1A, 1B. Ce dispositif détecteur peut être constitué de deux tiges flexibles semi-rigides 12a, 12b de forme générale analogue à celle des secoueurs ou bras cueilleurs 2a, 2b et fixées, symétriquement, en regard l'une de l'autre, par l'intermédiaire de leurs extrémités opposées et, par exemple, de supports 13a, 13a', 13b, 13b', sur deux éléments fixes se faisant face du bâti 6 du système de secouage, ces tiges n'étant donc pas entraînées en oscillation, lors du fonctionnement du système de secouage. D'autre part, les supports 13a, 13b soutenant l'extrémité avant (en considérant le sens d'avancement de la machine : voir flèche de la figure 3) des tiges de détection 12a, 12b sont équipés d'accéléromètres ou de détecteurs de chocs 14a, 14b, et sont fixés au bâti 6, par exemple, par l'intermédiaire de silentblocs 15a, 15b.

Lorsque les bras cueilleurs mobiles 2a, 2b font osciller un piquet Pi, celui-ci vient frapper alternativement sur la portion avant inclinée 12a', 12b', des tiges de détection 12a, 12b qui subissent alors des accélérations importantes lesquelles sont détectées par les accéléromètres ou par des détecteurs de chocs 14a, 14b, et transmises au système de commande électronique programmé pour réduire la fréquence et l'amplitude des mouvements des bras cueilleurs, de façon à ne pas casser le piquet.

On observe que les tiges flexibles semi-rigides 12a, 12b, jouent le rôle d'amortisseurs en s'opposant à la mise en vibration des piquets, ce qui évite que ces derniers ne cassent instantanément lors de leur passage entre les secoueurs 2a, 2b.

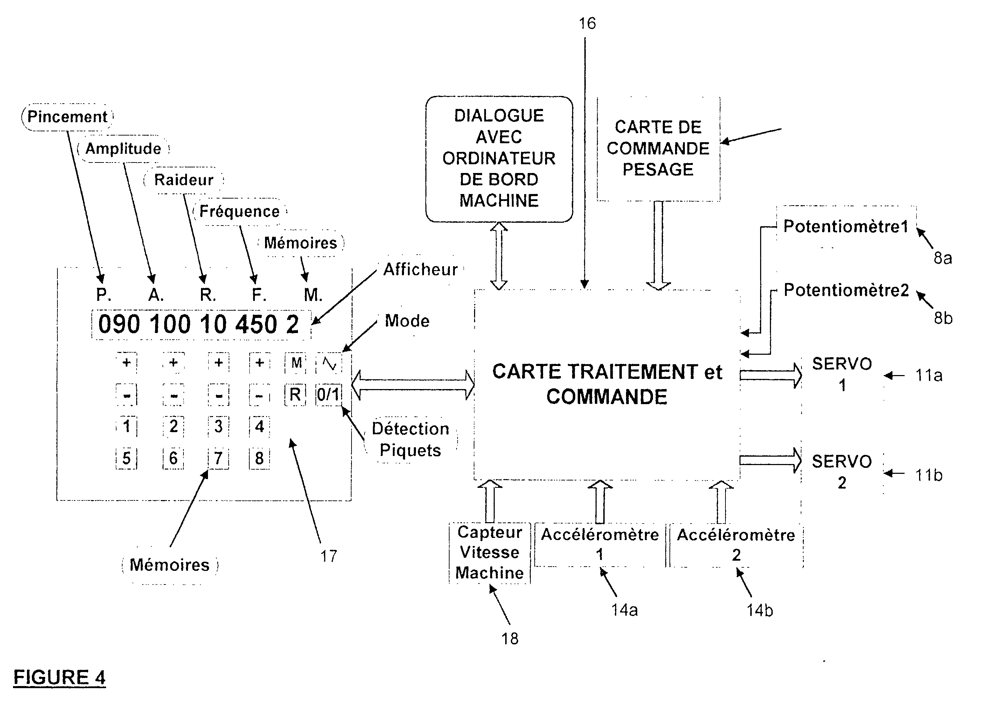

L'ensemble électronique de commande (figure 4) est constitué par une carte électronique à microprocesseur 16. Cette carte électronique comporte des entrées et sorties numériques et analogiques, à savoir :
- Entrées numériques : le clavier de commande 17 et le capteur de vitesse d'avancement de la machine 18 ;
- Entrées analogiques : les deux capteurs (angulaires ou linéaires) de position 8a, 8b, des bras cueilleurs 2a, 2b, les accéléromètres ou les détecteurs de chocs 14a, 14b de détection des piquets ;
- Sorties analogiques : les sorties vers les servovalves (ou vers les électrodistributeurs proportionnels) 11a, 11b;
- Sorties numériques : le clavier de commande 17.

Le clavier de commande 17 permet de rentrer dans le système, les paramètres suivants du secouage : amplitude, raideur (accélération), fréquence et pincement. Ces paramètres seront optimisés en fonction de la variété et de la maturité et seront alors enregistrés en mémoire pour être réutilisés à la demande.

L'opérateur peut également sélectionner le mode de travail : mode non proportionnel à l'avancement, mode proportionnel, mode proportionnel avec cycle de décompression ; ainsi que les paramètres de secouage qui ne seront utilisés qu'au moment du passage des piquets.

Une fois les paramètres définis, la carte de traitement de commande à microprocesseur va les analyser et générer les signaux de commande pour chacune des servovalves 11a, 11b, dans le cadre d'une boucle d'asservissement, par exemple du genre PI (Proportionnel Intégral) ou PID (Proportionnel Intégral Dérivé) dans laquelle les potentiomètres 8a, 8b, par l'intermédiaire de convertisseurs analogiques digitals transmettent à la boucle d'asservissement la position des arbres de secouage. Dans le secouage traditionnel qui équipe à l'heure actuelle toutes les machines à vendanges, le mouvement de secouage généré par les systèmes bielle/manivelle est une loi sinusoïdale fixe. Cette loi a des inconvénients : impossibilité de régler indépendamment l'accélération et la fréquence. Il n'est donc pas possible de réaliser mécaniquement un dispositif de secouage proportionnel à l'avancement.

Or, on sait que dans les terrains vallonnés, il n'est pas toujours possible de maintenir une vitesse d'avancement constante. L'opérateur est donc conduit à choisir des paramètres moyens, avec les machines actuelles.

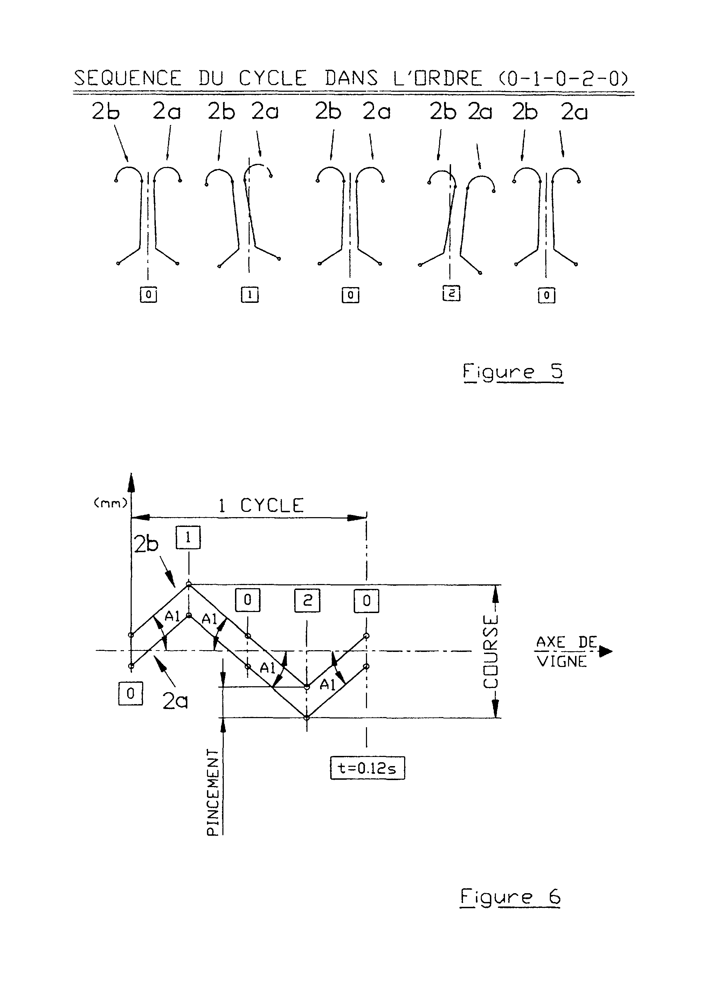

Selon une autre disposition caractéristique du procédé de l'invention, l'ensemble électronique de commande est programmé pour que la fréquence de secouage soit proportionnelle à la vitesse d'avancement de la machine, de sorte que le pied de vigne soit soumis au même nombre de coups et à la même accélération quelle que soit la vitesse d'avancement. Pour comprendre plus en détail ce mouvement, il est possible de se reporter aux figures 5, 6, 7 et 8.

La figure 5 est la représentation schématique du cycle des transformations que subissent deux bras cueilleurs associés, lors du secouage.

Les schémas des figures 6, 7 et 8 montrent, à titre d'exemple seulement, les variations de la durée d'un cycle de secouage, en fonction de la vitesse de déplacement de la machine :
- la figure 6 montre un cycle d'une durée de 0.12s correspondant à une fréquence de secouage de 500 coups/mn pour une vitesse d'avancement de la machine de 5 km/h ;

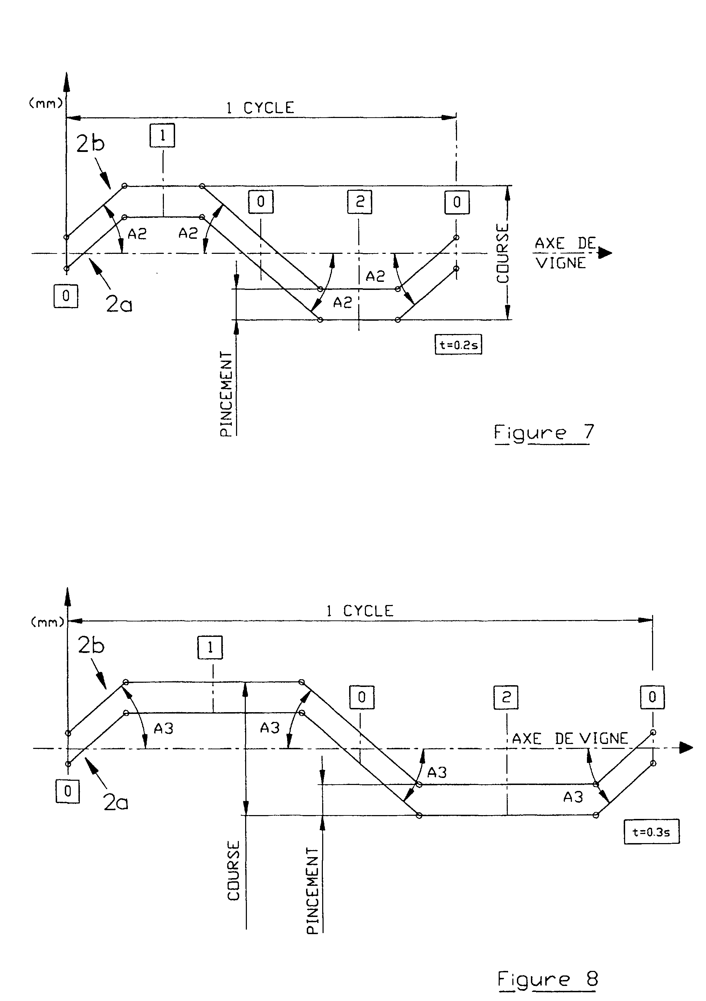

- la figure 7 montre un cycle d'une durée de 0.2s correspondant à une fréquence de secouage de 300 coups/mn pour une vitesse d'avancement de la machine de 3 km/h ;
- la figure 8 montre un cycle d'une durée de 0.3s correspondant à une fréquence de secouage de 200 coups/mn pour une vitesse d'avancement de la machine de 2 km/h.

Comme indiqué précédemment, il est également important que chaque pied de vigne soit soumis à la même accélération, quelle que soit la vitesse d'avancement de la machine. Pour cela, selon le procédé de l'invention, on génère, à chaque alternance du cycle, des temps morts de durée proportionnelle à la diminution de la vitesse d'avancement de la machine et de la fréquence de secouage, au-dessous de seuils prédéterminés, par exemple au dessous d'une fréquence de secouage de 500 coups/mn et d'une vitesse d'avancement de la machine de 5 km/h selon l'exemple retenu. De la sorte, l'accélération des secoueurs ou bras cueilleurs (2a, 2b) reste identique, quelles que soient la vitesse d'avancement de la machine de récolte et la fréquence de secouage.

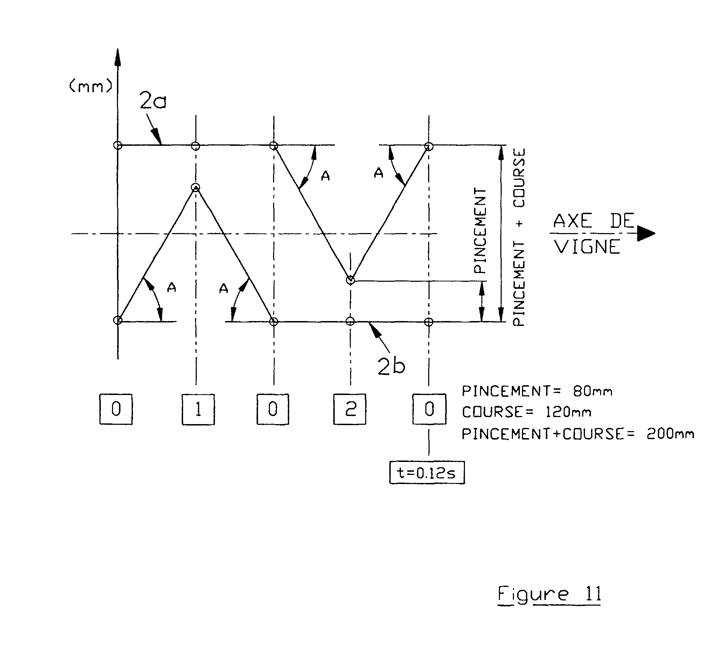

Cette disposition caractéristique sera mieux comprise en se reportant aux figures 11, 6, 7 et 8, sur lesquelles les pentes désignées par les flèches A, A1, A2, A3, respectivement, sont identiques.

Avec les machines et procédés de secouage mécanique actuels à système bielle/manivelle, les bras cueilleurs se déplacent toujours avec un pincement fixe (figures 5 à 8). Ce pincement est très faible (maximum 10 cm) et la végétation est donc contrainte de passer intégralement dans cet espace très réduit. Par exemple, la végétation du vignoble bordelais qui présente une épaisseur de l'ordre de 30 à 40 cm, est contrainte de passer dans un espacement de 8 cm. Une telle compression de la végétation engendre des casses de bois, une chute importante de feuilles, une flexion des piquets, une détérioration des grappes de fruit et une mauvaise chute des baies dans les convoyeurs de la machine.

Selon une autre disposition caractéristique de l'invention, l'ensemble électronique de commande est programmé pour commander successivement les servovalves 11a, 11b d'actionnement des ensembles droit et gauche de bras cueilleurs 2a, 2b, respectivement, de façon à assurer un déplacement non simultané de ces derniers.

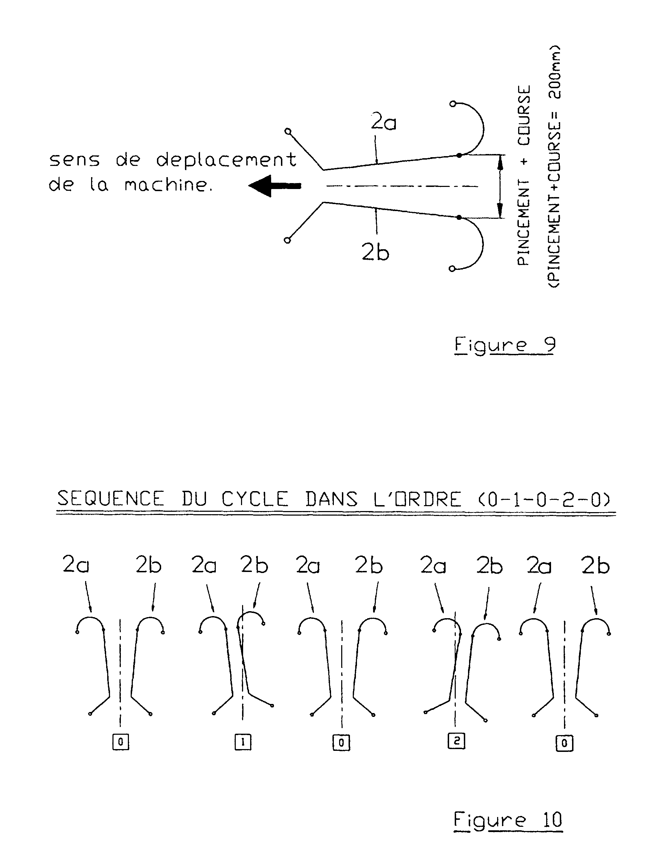

Ce cycle de secouage que l'on appelle cycle à décompression automatique est illustré schématiquement aux figures 9 à 11.

On rappelle que dans une alternance de secouage ou vibration, il y a toujours un ensemble de bras cueilleurs qui s'avance vers la végétation, tandis que l'autre s'éloigne simultanément de cette dernière. Dans les machines et procédés actuels, les bras cueilleurs des deux ensembles qui se déplacent simultanément restent à une distance fixe (pincement) l'un par rapport à l'autre. Dans le cycle à décompression automatique selon l'invention, pour la même alternance, l'ensemble de bras cueilleurs (par exemple ensemble 1A) qui s'éloigne de la végétation se déplace en premier pendant que l'autre (ensemble 1B) reste fixe. Lorsque cet ensemble arrive en bout de course, il s'immobilise. A cet instant, l'autre ensemble (ensemble 1B) se déplace à son tour, jusqu'à parvenir à sa fin de course, etc.

On constate que, suivant ce cycle à décompression automatique, on obtient un pincement qui est égal au pincement initial plus la course.

Par exemple, dans le cas précédent de 8 cm de pincement, on passe à 8 cm + 12 cm de course = 20 cm.

La lecture des figures 9 à 11 permet de mieux comprendre le procédé de secouage par décompression, la figure 11 montrant schématiquement, à titre d'exemple seulement, un cycle à décompression automatique d'une durée de 0.12s correspondant à une fréquence de secouage de 500 coups/mn pour une vitesse d'avancement de la machine de 5 km/h.

La combinaison du cycle proportionnel à l'avancement et du cycle de décompression automatique permet d'obtenir des résultats, au point de vue vitesse d'avancement, homogénéité et qualité de la récolte, réduction des pertes au sol, incomparables par rapport au système traditionnel.

Le procédé et la machine de secouage selon l'invention permettent une meilleure protection du matériel végétal, une vendange plus saine avec des baies moins écrasées, plus de grappes entières et une meilleure protection du palissage et plus particulièrement des piquets en béton ou en bois.

## Revendications

1. Machine de récolte sélective de baies, par exemple machine à vendanger, du genre comprenant un système de secouage constitué de deux ensembles de détachement des baies (1A, 1B) comportant, chacun, au moins un bras cueilleur et, de préférence, une pluralité de bras cueilleurs (2a, 2b) superposés, caractérisée en ce que ledit système de secouage est accouplé à au moins un dispositif électro-hydraulique d'entrainement comprenant au moins un vérin hydraulique (5a, 5b) commandé par une servovalve ou par un électro-distributeur proportionnel (11a, 11b) asservi(e) par un ensemble électronique de commande, par exemple à microprocesseur (16), ledit dispositif permettant de générer une infinité de mouvements de récolte.

2. Machine de récolte sélective de baies selon la revendication 1, caractérisée en ce que chaque ensemble de détachement de baies (1A, 1B) est accouplé à un dispositif électro-hydraulique d'entraînement comprenant un vérin hydraulique (5a, 5b) commandé par une servovalve ou par un électrodistributeur proportionnel distinct(e) (11a, 11b), ces deux servovalves ou électrodistributeurs proportionnels étant asservi(e)s par l'ensemble électronique de commande à microprocesseur (16).

3. Machine de récolte sélective de baies, selon l'une des revendications 1 ou 2, caractérisée en ce qu'elle comporte des capteurs de position (8a, 8b) des ensembles de détachement des baies (1A, 1B), ces capteurs reliés à l'ensemble électronique de commande à microprocesseur, permettant de relever, en permanence, la position des bras cueilleurs (2a, 2b).

4. Machine de récolte sélective de baies, selon la revendication 3, caractérisée en ce que les capteurs de position (8a, 8b) des ensembles de détachement des baies (1A, 1B), sont des capteurs angulaires, par exemple constitués par des potentiomètres, ces capteurs étant placés, par exemple, à la partie supérieure des arbres oscillants (3a, 3b) desdits ensembles de détachement des baies (1A, 1B), lesdits capteurs permettant, en permanence, de relever la position angulaire de chacun desdits arbres oscillants.

5. Machine de récolte sélective de baies, selon la revendication 3, caractérisée en ce que les capteurs de position (8a, 8b) des ensembles de détachement des baies (1A, 1B), sont des capteurs linéaires.

6. Machine de récolte sélective de baies, selon l'une quelconque des revendications 1 à 5, comportant un système de secouage constitué de deux ensembles de détachement des baies (1A, 1B) et actionné par un dispositif hydraulique (5a, 5b ; 11a, 11b) piloté par un système de commande (16), caractérisée en ce qu'un dispositif détecteur de piquets (12a, 12b), par exemple disposé dans l'espace ou en regard de l'espace ménagé entre lesdits ensembles de détachement des baies (1A, 1B), est relié électriquement ou mécaniquement audit système de commande (16), de façon à transmettre à ce dernier les informations de présence de piquets (Pi), ledit système de commande (16) étant configuré ou programmé pour réduire au moins un paramètre de secouage tel que, par exemple, fréquence, et/ou amplitude, et/ou accélération, lors de la réception des informations de rencontre des piquets (Pi) transmises par ledit dispositif détecteur de piquets (12a, 12b).

7. Machine de récolte sélective de baies, selon la revendication 6, caractérisée en ce que le système de commande est constitué par un ensemble électronique de commande à microprocesseur (16) relié au dispositif détecteur de piquet (12a, 12b), par exemple disposé au-dessus des ensembles de détachement des baies (1A, 1B), ledit ensemble électronique de commande à microprocesseur (16) étant programmé pour réduire la violence du secouage lors de la rencontre des piquets (Pi).

8. Machine de récolte sélective de baies, suivant la revendication 7, caractérisée en ce que le détecteur de piquets est constitué de deux tiges flexibles semi-rigides (12a, 12b) fixées en regard l'une de l'autre sur deux éléments fixes se faisant face du bâti (6) du système de secouage, par exemple par l'intermédiaire de supports (13a, 13a', 13b, 13b'), les supports (13a, 13b) soutenant l'extrémité avant des tiges de détection (12a, 12b) étant équipés d'accéléromètres ou de détecteurs de chocs (14a, 14b) et étant fixés audit bâti (6), par exemple, par l'intermédiaire de silentblocs (15a, 15b).

9. Procédé de récolte sélective de baies, par exemple procédé de vendange, utilisant un système de secouage constitué de deux ensembles de détachement des baies (1A, 1B) comportant, chacun, au moins un bras cueilleur et, de préférence, une pluralité de bras cueilleurs (2a, 2b) superposés, caractérisé en ce que l'on accouple ledit système de secouage à au moins un dispositif électro-hydraulique d'entrainement comprenant au moins un vérin hydraulique (5a, 5b) commandé par une servovalve ou par un électrodistributeur proportionnel (11a, 11b), et en ce que l'on asservit ladite servovalve ou ledit électrodistributeur proportionnel par un ensemble électronique de commande, par exemple à microprocesseur (16), ledit dispositif et ledit ensemble électronique permettant de générer une infinité de mouvements de récolte.

10. Procédé de récolte sélective de baies selon la revendication 9, caractérisé en ce que l'on accouple chaque ensemble de détachement de baies (1A, 1B) à un dispositif électro-hydraulique d'entraînement distinct comprenant un vérin hydraulique (5a, 5b) commandé par une servovalve ou par un électrodistributeur proportionnel distinct(e)s (11a, 11b), et en ce que l'on asservit ces deux servovalves ou électrodistributeurs proportionnels par l'ensemble électronique à micro-processeur (16).

11. Procédé de récolte sélective de baies, selon l'une des revendications 9 ou 10, caractérisé en ce que l'on relie l'ensemble électronique de commande (16) à des capteurs de position (8a, 8b) permettant, en permanence, de relever la position des bras cueilleurs (2a, 2b).

12. Procédé de récolte sélective de baies, selon l'une quelconque des revendications 9 à 11, utilisant un système de secouage constitué de deux ensembles de détachement des baies (1A, 1B) et actionné par un dispositif hydraulique (5a, 5b ; 11a, 11b) piloté par un système de commande (16), caractérisé en ce que l'on relie ce système de commande (16) à un dispositif détecteur de piquets (12a, 12b), et en ce que l'on configure ou programme ledit système de commande (16) de façon à réduire au moins un paramètre de secouage (par exemple : fréquence, et/ou amplitude, et/ou accélération), à la réception des informations émises par ledit dispositif détecteur de piquets (12a, 12b) lors de la rencontre des piquets.

13. Procédé de récolte sélective de baies selon la revendication 12, suivant lequel le dispositif hydraulique (5a, 5b ; 11a, 11b) d'actionnement des ensembles de détachement des baies (1A, 1B) est commandé par un ensemble électronique de commande (16), par exemple à microprocesseur, caractérisé en ce que l'on relie ledit ensemble électronique de commande (16) à un détecteur de piquet (12a, 12b), par exemple disposé au-dessus desdits ensembles de détachement des baies (1A, 1B), et en ce que l'on programme ledit ensemble électronique de commande (16) pour réduire la violence de secouage lors de la rencontre des piquets (Pi).

14. Procédé de récolte sélective de baies selon l'une quelconque des revendications 9 à 13 caractérisé en ce que l'ensemble électronique de commande (16) est programmé pour que la fréquence de secouage soit proportionnelle à la vitesse d'avancement de la machine, de sorte que le pied de vigne soit soumis au même nombre de coups et d'accélération quelle que soit la vitesse d'avancement.

15. Procédé de récolte sélective de baies, selon l'une quelconque des revendications 9 à 14, caractérisé en ce que l'ensemble électronique de commande (16) est programmé pour générer, à chaque alternance du cycle de secouage, des temps morts de durée proportionnelle à la diminution de la vitesse d'avancement de la machine et de la fréquence de secouage, au-dessous de seuils prédéterminés, de sorte que l'accélération des secoueurs ou bras cueilleurs (2a, 2b) reste identique quelles que soient la vitesse d'avancement de la machine et la fréquence de secouage.

16. Procédé de récolte sélective de baies, suivant l'une quelconque des revendications 9 à 15, caractérisé en ce que l'ensemble électronique de commande (16) est programmé pour commander successivement les électrodistributeurs proportionnels ou servovalves (11a, 11b) d'actionnement des ensembles droit et gauche (1A, 1B) de bras cueilleurs de façon à assurer un déplacement non simultané de ces derniers.

17. Procédé de récolte sélective de baies, selon l'une quelconque des revendications 9 à 16, caractérisé en ce que les paramètres optimum de la récolte sont programmés dans une banque de données de parcelles et/ou de cépages, en fonction de chaque parcelle, de façon à pouvoir les utiliser d'année en année sur les variétés identiques.

## Patentansprüche

1. Maschine für die selektive Ernte von Beeren, beispielsweise eine Maschine für die Weinlese, der Bauart, die ein Schüttelsystem enthält, das aus zwei Einheiten zum Abtrennen der Beeren (1A, 1B) besteht, von denen jede mindestens einen Pflückarm und vorzugsweise mehrere übereinander angeordnete Pflückarme (2a, 2b) aufweist, dadurch gekennzeichnet, daß das Schüttelsystem mit mindestens einer elektrohydraulischen Antriebseinrichtung gekoppelt ist, die mindestens einen Hydraulikzylinder (5a, 5b) umfasst, der über ein Servoventil oder einen Proportional-Elektroverteiler (11a, llb) gesteuert wird, der über eine elektronische Steuereinheit angesteuert wird, beispielsweise mit einem Mikroprozessor (16), wobei mit dieser Einrichtung eine unendliche Anzahl von Erntebewegungen erzeugt werden kann.

2. Maschine für die selektive Ernte von Beeren nach Anspruch 1, dadurch gekennzeichnet, daß jede Einheit zum Abtrennen der Beeren (1A, 1B) mit einer elektrohydraulischen Antriebseinrichtung gekoppelt ist, die einen Hydraulikzylinder (5a, 5b) umfasst, der über ein getrenntes Servoventil oder einen getrennten Proportional-Elektroverteiler (lla, 11b) gesteuert wird, wobei die beiden Servoventile oder Proportional-Elektroverteiler von einer elektronischen Steuereinheit mit einem Mikroprozessor (16) angesteuert werden.

3. Maschine für die selektive Ernte von Beeren nach einem der Ansprüche 1 oder 2, dadurch gekennzeichnet, daß sie zwei Positions-Meßwertgeber (8a, 8b) für die Einheiten zum Abtrennen der Beeren (1A, 1B) umfasst, wobei die beiden Meßwertgeber mit der elektronischen Steuereinheit mit Mikroprozessor verbunden sind, wodurch die Position der Pflückarme (2a, 2b) permanent erfasst werden kann.

4. Maschine für die selektive Ernte von Beeren nach Anspruch 3, dadurch gekennzeichnet, daß die Positions-Meßwertgeber (8a, 8b) für die Einheiten zum Abtrennen der Beeren (1A, 1B) Winkelmeßwertgeber sind, die beispielweise aus Potentiometern gebildet werden, wobei diese Meßwertgeber beispielsweise im oberen Teil der Schwingwellen (3a, 3b) der Einheiten zum Abtrennen der Beeren (1A, 1B) positioniert sind, wobei mit diesen Meßwertgebern die Winkelposition jeder der Schwingwellen permanent erfasst werden kann.

5. Maschine für die selektive Ernte von Beeren nach Anspruch 3, dadurch gekennzeichnet, daß die Positions-Meßwertgeber (8a, 8b) der Einheiten zum Abtrennen der Beeren (la, 1B) lineare Meßwertgeber sind.

6. Maschine für die selektive Ernte von Beeren nach einem der Ansprüche 1 bis 5, die ein Schüttelsystem enthält, das aus zwei Einheiten zum Abtrennen der Beeren (1A, 1B) gebildet und von einer Hydraulikeinrichtung (5a, 5b; 11a, 11b) angetrieben wird, die über ein Steuersystem (16) gesteuert wird, dadurch gekennzeichnet, daß eine Einrichtung zum Erfassen der Pfähle (12a, 12b), die beispielsweise im Raum oder in Bezug auf den Raum zwischen den Einheiten zum Abtrennen der Beeren (lA, 1B) angeordnet ist, elektrisch oder mechanisch mit dem Steuersystem (16) so verbunden ist, daß sie diesem die Daten der vorhandenen Pfähle (Pi) übermittelt, wobei das Steuersystem (16) so konfiguriert oder programmiert ist, daß mindestens ein Schüttelparameter, wie beispielweise Frequenz und/oder Amplitude und/oder Beschleunigung, während des Empfangs der Daten zu vorhandenen Pfählen (Pi) reduziert wird, die von der Einrichtung zum Erfassen von Pfählen (12a, 12b) übermittelt werden.

7. Maschine für die selektive Ernte von Beeren nach Anspruch 6, dadurch gekennzeichnet, daß das Steuersystem aus einer elektronischen Steuereinheit mit einem Mikroprozessor (16) gebildet wird, die mit einer Einrichtung zum Erfassen von Pfählen (12a, 12b) verbunden ist, die beispielsweise über den Einheiten zum Abtrennen der Beeren (1A, 1B) angeordnet ist, wobei die elektronische Steuereinheit mit Mikroprozessor (16) so programmiert ist, daß die Heftigkeit der Schüttelbewegungen beim Auftreffen auf Pfähle (Pi) reduziert wird.

8. Maschine für die selektive Ernte von Beeren nach Anspruch 7, dadurch gekennzeichnet, daß die Erfassungseinrichtung für Pfähle aus zwei flexiblen, halbstarren Stäben (12a, 12b) gebildet wird, die zueinander auf zwei festen, dem Rahmen (6) des Schüttelsystems gegenüberliegenden Elementen befestigt sind, beispielsweise mittels Halterungen (13a, 13a', 13b, 13b'), wobei die Halterungen (13a, 13b) das vordere Ende der Erfassungsstäbe (12a, 12b) stützen, die mit Beschleunigungsmessern oder Erschütterungs-Meßwertgebern (14a, 14b) ausgestattet und an dem Rahmen (6) befestigt sind, beispielsweise über Silentblöcke (15a, 15b).

9. Maschine für die selektive Ernte von Beeren, beispielsweise für die Weinlese, die mit einem Schüttelsystem arbeitet, das aus zwei Einheiten zum Abtrennen der Beeren (1A, 1B) besteht, von denen jede mindestens einen Pflückarm und vorzugsweise mehrere übereinander angeordnete Pflückarme (2a, 2b) aufweist, dadurch gekennzeichnet, daß man das Schüttelsystem an mindestens eine elektrohydraulische Antriebseinrichtung ankoppelt, die mindestens einen Hydraulikzylinder (5a, 5b) umfasst, der über ein Servoventil oder einen Proportional-Elektroverteiler (11a, 11b) gesteuert wird, und dadurch, daß das Servoventil oder der Proportional-Elektroverteiler über eine elektronische Steuereinheit, beispielsweise mit einem Mikroprozessor (16), angesteuert wird, wobei mit dieser Einrichtung und der elektronischen Einheit eine unendliche Anzahl von Erntebewegungen erzeugt werden können.

10. Verfahren für die selektive Ernte von Beeren nach Anspruch 9, dadurch gekennzeichnet, daß man jede Einheit zum Abtrennen der Beeren (1A, 1B) getrennt an eine elektrohydraulische Antriebseinrichtung mit einem Hydraulikzylinder (5a, 5b) ankoppelt, der über ein getrenntes Servoventil oder einen getrennten Proportional-Elektroverteiler (lla, llb) gesteuert wird, und dadurch, daß die beiden Servoventile oder Proportional-Elektroverteiler über die elektronische Steuereinheit mit einem Mikroprozessor (16) angesteuert werden.

11. Verfahren für die selektive Ernte von Beeren nach einem der Ansprüche 9 oder 10, dadurch gekennzeichnet, daß man die elektronische Steuereinheit (16) mit Positions-Meßwertgebern (8a, 8b) verbindet, um permanent die Position der Pflückarme (2a, 2b) erfassen zu können.

12. Verfahren für die selektive Ernte von Beeren nach einem der Ansprüche 9 bis 11, dadurch gekennzeichnet, daß es mit einem Schüttelsystem arbeitet, das aus zwei Einheiten zum Abtrennen der Beeren (1A, 1B) gebildet und von einer Hydraulikeinrichtung (5a, 5b; lla, llb) angetrieben wird, die von einem Steuersystem (16) gesteuert wird, dadurch gekennzeichnet, daß man das Steuersystem (16) mit einer Einrichtung zum Erfassen von Pfählen (12a, 12b) verbindet, und dadurch, daß man das Steuersystem (16) so konfiguriert oder programmiert, daß mindestens einer der Schüttelparameter (beispielweise: Frequenz und/oder Amplitude und/oder Beschleunigung) beim Empfang der von der Einrichtung zum Erfassen von Pfählen (12a, 12b) übermittelten Daten beim Auftreffen auf Pfähle reduziert wird.

13. Verfahren für die selektive Ernte von Beeren nach Anspruch 12, bei dem die Hydraulik-Antriebseinrichtung (5a, 5b; 11a, 11b) der Einheiten zum Abtrennen der Beeren (1A, 1B) von einer elektronischen Steuereinheit (16), beispielsweise mit einem Mikroprozessor, gesteuert wird, dadurch gekennzeichnet, daß man die elektronische Steuereinheit (16) mit einer Einrichtung zum Erfassen von Pfählen (12a, 12b) verbindet, die beispielsweise über den Einheiten zum Abtrennen der Beeren (1A, 1B) angeordnet ist, und dadurch, daß man die elektronische Steuereinheit (16) so programmiert, daß die Heftigkeit der Schüttelbewegungen beim Auftreffen auf Pfähle (Pi) reduziert wird.

14. Verfahren für die selektive Ernte von Beeren nach einem der Ansprüche 9 bis 13, dadurch gekennzeichnet, daß die elektronische Steuereinheit (16) so programmiert ist, daß die Schüttelfrequenz proportional zur Vorschubgeschwindigkeit der Maschine ist, so daß der Rebstock immer der gleichen Anzahl von Stößen mit der gleichen Beschleunigung ausgesetzt ist, gleichgültig, wie hoch die Vorschubgeschwindigkeit ist.

15. Verfahren für die selektive Ernte von Beeren nach einem der Ansprüche 9 bis 14, dadurch gekennzeichnet, daß die elektronische Steuereinheit (16) so programmiert ist, daß sie bei jeder Änderung des Schüttelzyklus eine Leerlaufzeit generiert, deren Dauer proportional zur Verminderung der Vorschubgeschwindigkeit der Maschine und der Schüttelfrequenz unter vorbestimmte Schwellenwerte ist, so daß die Beschleunigung der Schütteleinrichtungen oder Pflückarme (2a, 2b) weiterhin gleich bleibt, unabhängig von der Vorschubgeschwindigkeit der Maschine und der Schüttelfrequenz.

16. Verfahren für die selektive Ernte von Beeren nach einem der Ansprüche 9 bis 15, dadurch gekennzeichnet, daß die elektronische Steuereinheit (16) so programmiert ist, daß sie nacheinander die Proportional-Elektroverteiler oder Antriebsservoventile (11a, 11b) der Pflückarmeinrichtungen rechts und links (1A, 1B) steuert, so daß deren nicht gleichzeitige Verschiebung sichergestellt ist.

17. Verfahren für die selektive Ernte von Beeren nach einem der Ansprüche 9 bis 16, dadurch gekennzeichnet, daß die optimalen Ernteparameter in einer Datenbank für Parzellen und/oder Rebsorten programmiert werden, um sie je nach Parzelle jedes Jahr wieder für identische Varianten verwenden zu können.

## Claims

1. Machine for selective berry harvesting, for example a grape gathering machine, of the type incorporating a shaking system constituted by two berry removal units (1A, 1B) each comprising at least one picking arm, preferably a plurality of picking arms (2a, 2b) arranged one above the other, characterised in that said shaking system is coupled to at least one electro-hydraulic drive system incorporating at least one hydraulic jack (5a, 5b) operated by a servo valve or a proportional electro-distributor (11a, 11b) controlled by an electronic control unit, for example a microprocessor-controlled unit (16), said drive system allowing an infinite number of harvesting movements to be generated.

2. Machine for selective berry harvesting according to claim 1, characterised in that each berry removal unit (1A, 1B) is coupled to an electro-hydraulic drive system incorporating a hydraulic jack (5a, 5b) controlled by a separate servo valve or proportional electro-distributor (11a, 11b), these two servo valves or proportional electro-distributors being controlled by the microprocessor-controlled electronic control unit (16).

3. Machine for selective berry harvesting according to either of claims 1 and 2, characterised in that it has sensors (8a, 8b) for detecting the position of the berry removal units (1A, 1B), said sensors being connected to the microprocessor-controlled electronic control unit, enabling the position of the picking arms (2a, 2b) to be ascertained at all times.

4. Machine for selective berry harvesting according to claim 3, characterised in that the sensors (8a, 8b) for detecting the position of the berry removal units (1A, 1B) are angle sensors, for example constituted by potentiometers, these sensors for example being positioned on the upper part of the rock shafts (3a, 3b) of said berry removal units (1A, 1B), and said sensors enabling the angular position of each of said rock shafts to be ascertained at all times.

5. Machine for selective berry harvesting according to claim 3, characterised in that the sensors (8a, 8b) for detecting the position of the berry removal units (1A, 1B) are linear sensors.

6. Machine for selective berry harvesting according to any of claims 1 to 5, having a shaking system constituted by two berry removal units (1A, 1B) and actuated by a hydraulic device (5a, 5b; 11a, 11b) operated by a master control system (16), characterised in that a device (12a, 12b) for detecting posts, for example arranged in the space or facing the space incorporated between said berry removal units (1A, 1B), is connected electronically or mechanically to the master control system (16) so as to transmit to the latter information about the presence of posts (Pi), said master control system (16) being configured or programmed to reduce at least one shaking parameter such as, for example, frequency and/or amplitude and/or acceleration, at the time that the information on encountering posts (Pi) transmitted by said post detecting device (12a, 12b) is received.

7. Machine for selective berry harvesting according to claim 6, characterised in that the master control system is constituted by a microprocessor-controlled electronic control unit (16) connected to the post detecting device (12a, 12b), for example arranged above the berry removal units (1A, 1B), said microprocessor-controlled electronic control unit (16) being programmed to reduce the vigour of the shaking action whenever posts (Pi) are encountered.

8. Machine for selective berry harvesting according to claim 7, characterised in that the post detector is constituted by two semi-rigid flexible rods (12a, 12b) fixed opposite one another on two fixed elements facing the frame (6) of the shaking system, for example by the agency of supports (13a, 13a', 13b, 13b'), the supports (13a, 13b) which support the front end of the detector rods (12a, 12b) being equipped with accelerometers or impact detectors (14a, 14b) and being fixed to said frame (6), for example by the agency of shock mounts (15a, 15b).

9. Method for selective berry harvesting, for example a grape gathering method, using a system of shaking constituted by two berry removal units (1A, 1B) each having at least one picking arm, preferably a plurality of picking arms (2a, 2b) arranged one above the other, characterised in that said shaking system is coupled to at least one electro-hydraulic drive system incorporating at least one hydraulic jack (5a, 5b) operated by a servo valve or by a proportional electro-distributor (11a, 11b), and in that said servo valve or said proportional electro-distributor is controlled by an electronic control unit, for example a microprocessor-controlled unit (16), said drive system and said electronic unit allowing an infinite number of harvesting movements to be generated.

10. Method for selective berry harvesting according to claim 9, characterised in that each berry removal unit (1A, 1B) is coupled to a separate electro-hydraulic drive system incorporating a hydraulic jack (5a, 5b) operated by a separate servo valve or proportional electro-distributor (11a, 11b), and in that these two servo valves or proportional electro-distributors are controlled by the microprocessor-controlled electronic unit (16).

11. Method for selective berry harvesting according to either of claims 9 and 10, characterised in that the electronic control unit (16) is connected to position sensors (8a, 8b) enabling the position of the picking arms (2a, 2b) to be ascertained at all times.

12. Method for selective berry harvesting according to any of claims 9 to 11, using a shaking system constituted by two berry removal units (1A, 1B) and actuated by a hydraulic system (5a, 5b; 11a, 11b) operated by a master control system (16), characterised in that said master control system (16) is connected to a post detecting device (12a, 12b), and in that said master control system (16) is configured or programmed so as to reduce at least one shaking parameter (for example frequency and/or amplitude and/or acceleration) on receipt of the information transmitted by said post detecting device (12a, 12b) upon encountering posts.

13. Method for selective berry harvesting according to claim 12, whereby the hydraulic device (5a, 5b; 11a, 11b) actuating the berry removal units (1A, 1B) is controlled by an electronic control unit (16), for example a microprocessor-controlled unit, characterised in that said electronic control unit (16) is connected to a post detector (12a, 12b), for example arranged above said berry removal units (1A, 1B), and in that said electronic control unit (16) is programmed to reduce the vigour of the shaking action whenever posts (Pi) are encountered.

14. Method for selective berry harvesting according to any of claims 9 to 13, characterised in that the electronic control unit (16) is programmed so that the shaking frequency is proportional to the machine's rate of advance, such that the vinestock is subjected to the same number of blows and acceleration whatever the rate of advance.

15. Method for selective berry harvesting according to any of claims 9 to 14, characterised in that the electronic control unit (16) is programmed to generate, with each alternation of the shaking cycle, idle machine times of a duration proportional to the reduction in the machine's rate of advance and shaking frequency, below preset thresholds, such that the acceleration of the shakers or picking arms (2a, 2b) remains the same whatever the machine's rate of advance and shaking frequency.

16. Method for selective berry harvesting according to any of claims 9 to 15, characterised in that the electronic control unit (16) is programmed to successively control the proportional electro-distributors or servo valves (11a, 11b) actuating the right-hand and left-hand picking arm units (1A, 1B) so as to ensure that the latter are not moved simultaneously.

17. Machine for selective berry harvesting according to any of claims 9 to 16, characterised in that the optimum harvesting parameters are programmed, for each parcel of land, into a database of land parcels and/or grape varieties, so as to enable said data to be used year after year on identical varieties.
